# EUROPÄISCHE PATENTSCHRIFT

(11) **EP 2 474 387 B1**
(45) Veröffentlichungstag und Bekanntmachung des Hinweises auf die Patenterteilung: **19.10.2016**
(21) Anmeldenummer: 12161633.8
(22) Anmeldetag: 04.05.2007
(51) Int. Cl.: B23Q 11/00, B25F 5/02

(54) **Absaugvorrichtung einer Elektrohandwerkzeugmaschine sowie Elektrohandwerkzeugmaschine mit Absaugvorrichtung**
Suction device of an electric hand-held machine tool and electric hand-held machine tool with suction device
Dispositif d'aspiration d'une machine-outil électromanuelle tout comme machine-outil électromanuelle dotée d'un dispositif d'aspiration

(30) Priorität: 28.06.2006 DE 102006029625
(43) Veröffentlichungstag der Anmeldung: 11.07.2012
(62) Teilanmeldung aus: 07107541.0
(73) Patentinhaber: Robert Bosch GmbH, 70442 Stuttgart (DE)
(72) Erfinder: Bochert, Juergen, 70565 Stuttgart (DE); Baumann, Otto, 70771 Leinfelden-Echterdingen (DE); Lennartz, Juergen, 73760 Ostfildern (DE); Bernhardt, Thomas, Nanjing (CN); Schmid, Hardy, 70565 Stuttgart (DE)

(56) Entgegenhaltungen:
- EP-A- 1 661 662
- EP-A1- 0 558 253
- EP-A1- 1 428 619
- WO-A-2005/025792
- DE-A1- 3 516 099
- DE-A1- 3 528 611
- DE-A1- 4 335 417
- DE-A1- 4 342 484
- DE-A1- 10 346 207
- GB-A- 2 349 068
- US-A- 4 192 390
- US-A1- 2002 026 775

## Beschreibung

### Stand der Technik

Die Erfindung betrifft eine Absaugvorrichtung einer Elektrohandwerkzeugmaschine in Pistolenbauweise aufgrund eines Griffteils und eines winklig zum Griffteil verlaufenden, einen Elektromotor mit Motordrehachse aufweisenden Motorteils, das eine eine Werkzeugdrehachse aufweisende Werkzeugaufnahme besitzt, wobei die Werkzeugdrehachse gleichgerichtet zur Motordrehachse verläuft, mit einem abnehmbaren Absaugmodul, das wenigstens einen Saugkopf zum Aufbringen auf einer Arbeitsfläche, wenigstens einen Saugkanal und einen Staubbehälter aufweist sowie ein arbeitsflächenseitiges Ende und ein maschinenseitiges Ende besitzt. Es ist bekannt, den Staubbehälter in Richtung der Werkzeugdrehachse gesehen neben dem Motorteil sowie am maschinenseitigen Ende anzuordnen. Dabei ist eine Entleerungsöffnung des Staubbehälters mit einer Klappe verschließbar. Zum Entleeren wird demzufolge nur die Klappe geöffnet, sodass der Staub entfernt werden kann.

Bei der Benutzung von Elektrohandwerkzeugmaschinen, beispielsweise beim Bohren von Löchern, insbesondere in Stein oder Beton, fällt Bohrmaterial - nachstehend oftmals als Staub bezeichnet - an, das möglichst direkt am Bohrloch abgeführt werden sollte, um eine Verschmutzung der Umgebung zu vermeiden. Neben konventionellen Absaugmethoden mittels eines externen Staubsaugers sind bereits verschiedene Staubabsaugvorrichtungen bekannt, die an Elektrohandwerkzeugmaschinen, wie beispielsweise Schlagbohrmaschinen und Bohrhämmer, angebracht werden können. Eine Staubaufnahme erfolgt dabei meist über einen angefederten Saugkopf, der im Bereich der Arbeitsfläche liegt. Der Staub wird über einen Saugkanal einem Staubbehälter zugeleitet.

Beispielsweise sind Absaugvorrichtungen für Elektrohandwerkzeugmaschinen bekannt, bei welchen die jeweilige Elektrohandwerkzeugmaschine einen zusätzlichen Sauglüfter aufweist, durch den anfallender Staub, wie Bohrgut und so weiter hindurch gesaugt wird. Der Staub wird dann in einem Auffangsack gesammelt, der dem Sauglüfter nachgeschaltet ist. Der Staub und so weiter bildet ein abrasives Medium, sodass der erwähnte Sauglüfter sehr stark belastet und daher aus Leichtmetall gefertigt ist.

Ferner sind Absaugvorrichtungen mit einer Staubabscheidung vor einem Sauglüfter bekannt. Der Sauglüfter befindet sich in der Absaugvorrichtung und wird von einer Zapfwelle der Elektrohandwerkzeugmaschine angetrieben. Bekannt ist es auch, den Sauglüfter mit Elektrolüftermotor in der Absaugvorrichtung unterzubringen und elektrische Kontaktstifte an der Absaugvorrichtung anzuordnen, die mit entsprechenden Gegenkontakten der Elektrohandwerkzeugmaschine beim Zuordnen der Absaugvorrichtung zur Elektrohandwerkzeugmaschine verbunden werden, um einen elektrischen Elektrolüftermotor für den Antrieb des Sauglüfter mit Strom zu versorgen. Die beiden letztgenannten Ausführungen sind bei Elektrohandwerkzeugmaschinen in sogenannter L-Bauweise ausgebildet. Diese L-Bauweise zeichnet sich dadurch aus, dass in einem Schenkel des L's der als Antrieb dienende Elektromotor für eine sich drehende Werkzeugaufnahme vorgesehen ist, und dass der andere Schenkel des L's ein Getriebe und/oder ein Schlagwerk und die bereits erwähnte Werkzeugaufnahme besitzt.

Eine Absaugvorrichtung für eine Elektrohandwerkzeugmaschine in Pistolenbauweise geht beispielsweise aus der DE 35 16 099 A1 hervor, wobei die Absaugvorrichtung einen Bohrkleinsauger aufweist, der an die Handwerkzeugmaschine angeflanscht ist.

Aus der deutschen Offenlegungsschrift 103 46 207 A1 ist eine Absaugvorrichtung für eine Elektrohandwerkzeugmaschine mit einem Saugkopf sowie einem in dem Saugkopf integrierten Staubbehälter bekannt. Der Staubbehälter steht über einen Saugkanal mit einem in der Elektrohandwerkzeugmaschine angeordneten Sauggebläse in Verbindung. Alternativ wird in dem genannten Stand der Technik vorgeschlagen, den Staubbehälter in einem vorderen Bereich des Saugkanals anzuordnen. Problematisch ist dabei jeweils, dass eine gewisse Kopflastigkeit der mit Absaugvorrichtung versehenen Elektrohandwerkzeugmaschine nicht vermieden werden kann, was ein Arbeiten erschwert.

Die US 4 192 390 A zeigt einen Bohrhammer mit einen Sauggebläserad, das auf der Motorwelle eines zum Antrieb eines Werkzeugs genutzten Antriebsmotors des Bohrhammers angeordnet ist. Ferner ist eine Absaugvorrichtung vorgesehen, die an dem Bohrhammer montierbar ist und die einen Luftstrom derart an dem Sauggebläserad vorbei führt, dass Staubpartikel auf eine in Strömungsrichtung vor dem Sauggebläserad angeordnete und als Prallteil ausgebildete Abscheideeinrichtung auftreffen, so dass ihnen auf ihrem Weg zu einem Sammelbehälter der Absaugvorrichtung ein Teil ihrer kinetischen Energie entzogen wird.

### Vorteile der Erfindung

Die erfindungsgemäße Absaugvorrichtung einer Elektrohandwerkzeugmaschine in Pistolenbauweise sieht vor, dass das Absaugmodul ein spielausgleichendes Element zur Verbindung mit der Elektrohandwerkzeugmaschine aufweist, wobei das Element einen Kamin bildet, der elastisch zu einem Dichtrahmen eines im Staubbehälter angeordneten Faltenfilters und elastisch zu einem zwischen einem Motorgehäuse und einem Getriebegehäuse der Elektrohandwerkzeugmaschine angeordneten modularen Zwischenstück ist. Das Zwischenstück umfasst dabei wenigstens einen Saugeinlass, einen Sauglüfterraum, einen Ausblasauslass und mindestens ein lösbares Befestigungselement für ein Befestigen des Absaugmoduls. Da die erfindungsgemäße Absaugvorrichtung selber keinen Sauglüfter aufweist, sondern sich der Sauglüfter in der Elektrohandwerkszeugmaschine befindet, ist bei der Verbindung von Absaugmodul, also Absaugvorrichtung, und Elektrohandwerkszeugmaschine darauf zu achten, dass der Staubbehälter mit dem Sauglüfter der Elektrohandwerkzeugmaschine zur Ausbildung eines Saugweges über das spielausgleichende Elemente im Wesentlichen spaltfrei verbunden wird. Dadurch kann die Absaugvorrichtung sicher der Elektrohandwerkzeugmaschine zugeordnet werden, ohne dass sich die Teile relativ zueinander bewegen können und daher ein "Wackeln" vorliegt.

Die erfindungsgemäße Absaugvorrichtung ist insbesondere Elektrohandwerkzeugmaschinen zuordenbar, die als Bohrmaschine, insbesondere Schlagbohrmaschine oder Bohrhammer, ausgebildet sind.

Es ist vorteilhaft, wenn die Klappe aus transparentem Material gebildet ist oder transparentes Material aufweist. Durch das transparente Material lässt sich erkennen, wie viel Staub sich im Staubbehälter angesammelt hat, sodass hier schnell entschieden werden kann, ob eine Entleerung notwendig ist oder nicht.

Insbesondere ist die Klappe im geöffnetem Zustand arretierbar. Dies erleichtert das Entleeren. Die Klappe kann ferner so ausgebildet sein, dass sie beim Einsetzen des Staubbehälters in das Gehäuse in Schließstellung gedrängt wird. Demzufolge ist sichergestellt, dass der in das Gehäuse eingesetzte Staubbehälter automatisch schließt.

Nach einer Weiterbildung der Erfindung ist vorgesehen, dass das Absaugmodul wenigstens einen Saugkopf, den Saugkanal sowie mindestens eine Schnittstelle - insbesondere zwei Schnittstellen (Luftzuführung und Luftabführung) - zum lösbaren Ankuppeln des Staubbehälters aufweist. Die vorgeschlagene Konstruktion bietet damit eine stabile, kompakte und leicht bedienbare Einheit. Der Saugkopf lässt sich direkt auf die Arbeitsfläche aufsetzen, sodass ein nahezu staubfreies Arbeiten ermöglicht wird. Insbesondere fällt kein gesundheitsschädlicher Staub, wie beispielsweise quarzhaltiger Bohrstaub, in der Umgebungsluft an.

Nach einer Weiterbildung der Erfindung ist vorgesehen, dass in einem Saugweg zwischen Saugkopf und dem Staubbehälter mindestens ein Faltenschlauch liegt. Der Faltenschlauch ist axial zusammenschiebbar beziehungsweise in der Länge vergrößerbar, sodass der Veränderung des Abstandes zur Arbeitsfläche durch beispielsweise Eindringen eines Bohrers in das Werkstück Rechnung getragen werden kann. Auch ist ein Einstellen auf die Länge des Werkzeugs, insbesondere auf die Länge eines Bohrers, dadurch ermöglicht.

Vorzugsweise gehört der Saugkopf einem Ansaugteil an, das mit dem Faltenschlauch verbunden ist. Ein Bereich des Ansaugteils verbindet demgemäß den Saugkopf mit dem Faltenschlauch.

Eine Weiterbildung der Erfindung sieht vor, dass der Staubbehälter in ein Gehäuse des Absaugmoduls entnehmbar einschiebbar ist. Demgemäß lässt sich der Staubbehälter zum Entleeren in einfacher Weise dem Gehäuse entnehmen und danach durch Einschieben wieder zuführen. Der Staubbehälter weist bevorzugt ein Dichtelement auf, das im in das Gehäuse eingesetzten Zustand des Staubbehälters zum zuführenden Saugkanal hin öffenbar, insbesondere durch das Einsetzen selbstöffenbar, ist. Wird der Staubbehälter in das Gehäuse eingeschoben, so wird das Dichtelement mittels eines den Staub zuführenden Stutzens beziehungsweise Vorsprungs, insbesondere eines gekrümmten Anschlussstücks des Faltenschlauchs, selbsttätig geöffnet und demzufolge Saugkanal und Staubbehälter selbsttätig miteinander verbunden. Wird der Staubbehälter der Absaugvorrichtung entnommen, so schließt sich das Dichtelement, wodurch der Staubbehälter automatisch geschlossen wird, sodass eine Entnahme des Staubbehälters möglich ist, ohne dass dabei Staub und dergleichen aus dem Staubbehälter nach außen tritt.

Insbesondere ist vorgesehen, dass der Staubbehälter erhabene Stoßelemente zur Schonung der übrigen Behälterstruktur aufweist. Wird der Staubbehälter beim Entleeren zum Beispiel an der Wandung einer Mülltonne oder dergleichen "leergeschlagen", so erfolgen die Stöße auf die erhabenen Stoßelemente und demzufolge nicht auf Behälterstrukturen, die nicht so stark belastbar sind und sich daher verformen würden oder Schaden nehmen könnten. Exponiert liegende Stoßflächen der Stoßelemente schützen demgemäß beim schlagenden Entleeren, um beispielsweise Reststaub aus dem Staubbehälter zu entfernen, die Dichtflächen, die der Behälter für die Verbindung zum Saugkanal und zur Elektrohandwerkzeugmaschine aufweist.

Eine Weiterbildung der Erfindung sieht vor, dass das Absaugmodul eine teleskopierbare Führungsschiene aufweist. Dadurch lässt sich eine bedarfsabhängige Längenverstellung, insbesondere des Saugkanals, realisieren. Der bereits erwähnte Faltenschlauch ist insbesondere längenverstellbar mit der Führungsschiene innerhalb dieser angeordnet Die Führungsschiene ist bevorzugt als ein in montiertem Zustand nach unten offenes Profil ausgebildet. Hierdurch kann vorteilhafter Weise der Ausgang des Faltenschlauches in Form eines Krümmers problemlos aus der Führungsschiene herausgeführt werden. Das Gehäuse der Absaugvorrichtung weist einen Führungsbereich auf, in dem die Führungsschiene teleskopartig geführt ist. Dieser Führungsbereich dient ferner zur lösbaren, rastenden Verbindung mit der Elektrohandwerkzeugmaschine. Führungsbereich und Führungsschiene sind demgemäß in Reihe zueinander angeordnet. Die Führungsschiene kann vorzugsweise als Stranggussprofil ausgebildet sein. Vorzugsweise ist sie mit einem eingeschobenen Lineal, beispielsweise aus Kunststoff, mit einer Verzahnung und einer Skala versehen. Günstigerweise können mit Hilfe von Verstellvorrichtungen, beispielsweise mit Hilfe von Reitern, Längeneinstellungen vorgenommen und/oder ein Tiefenanschlag realisiert werden. Hierbei hilft die Verzahnung des erwähnten Lineals. Die Reiter sind vorzugsweise in einer Nut geführt, die von Führungsschiene und Lineal gebildet wird. Sie können beispielsweise durch Federkraft in die Verzahnung einrasten und durch Anpressdruck verstellt werden.

Die Erfindung betrifft ferner ein Elektrohandwerkzeug in Pistolenbauweise aufgrund eines Griffteils und eines winklig zum Griffteil verlaufenden, einen Elektromotor mit Motordrehachse aufweisenden Motorteils, das eine eine Werkzeugdrehachse aufweisenden Werkzeugaufnahme besitzt, wobei die Werkzeugdrehachse gleichgerichtet zur Motordrehachse verläuft und eine Absaugvorrichtung vorgesehen ist, so wie sie vorstehend beschrieben wurde.

Es ist vorteilhaft, wenn die als Absaugmodul ausgebildete Absaugvorrichtung über mindestens eine lösbare Rastverbindung an der Elektrohandwerkzeugmaschine befestigbar ist.

### Zeichnungen

Weitere Ausführungsformen, Aspekte und Vorteile der Erfindung ergeben sich aus den Ansprüchen und/oder der nachfolgend anhand von Zeichnungen dargestellten Ausführungsbeispiele.

Im Folgenden zeigen:
- Fig. 1: eine perspektivische Ansicht einer erfindungsgemäßen Elektrohandwerkzeugmaschine;
- Fig. 2: eine Ansicht der Elektrohandwerkzeugmaschine mit montiertem Absaugmodul;
- Fig. 3: eine Ansicht der Elektrohandwerkzeugmaschine mit montiertem Absaugmodul gemäß Fig. 2 mit abgehobener Gehäuseschale;
- Fig. 4: eine Detailansicht einer bevorzugten Ausführungsform einer Führungsschiene;
- Fig. 5: eine Detailansicht einer bevorzugten Ausführungsform eines Staubbehälters;
- Fig. 6a,b: eine bevorzugte Ausführungsform einer erfindungsgemäßen Elektrohandwerkzeugmaschine mit Absaugmodul in einer Schnittdarstellung (Fig. 6a) und eine Detailansicht des Absaugmoduls im Längsschnitt (Fig. 6b) entlang der Linie B-B gemäß Fig. 6a und
- Fig. 7: eine Detailansicht der Elektrohandwerkzeugmaschine im Bereich einer Saugeinheit.

### Beschreibung des Ausführungsbeispiels

Gleiche Elemente sind in den Figuren mit den gleichen Bezugszeichen versehen.

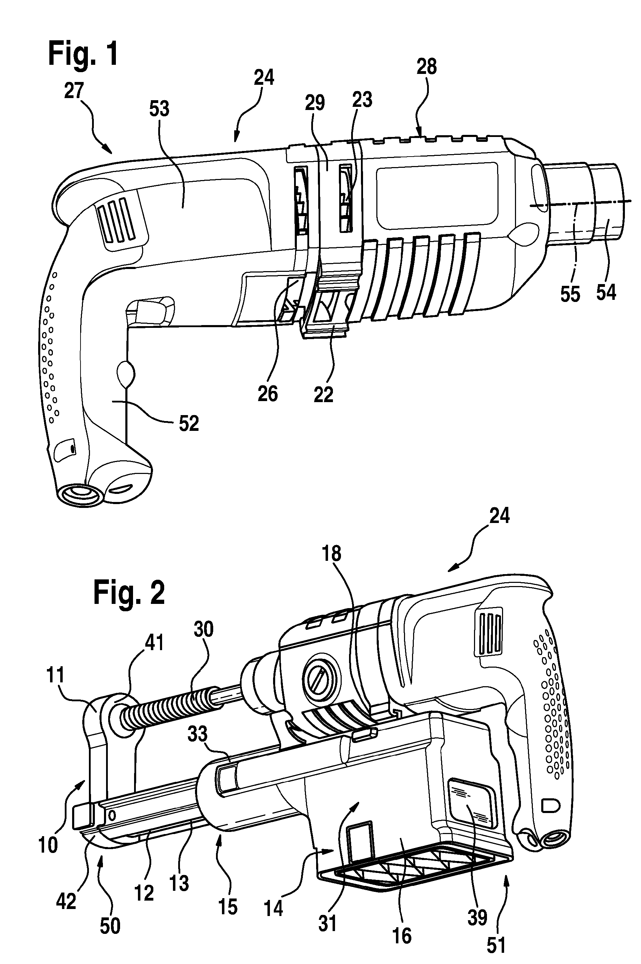

In Fig. 1 ist eine erfindungsgemäße Elektrohandwerkzeugmaschine 24 in Pistolenform gezeigt, an welcher ein in Fig. 1 nicht gezeigtes Absaugmodul (Fig. 2) lösbar über eine Rastverbindung 22 befestigbar ist. Die Elektrohandwerkzeugmaschine 24 weist eine verlängerte Motorwelle auf, auf welcher eine Saugeinheit 23 angeordnet ist, die einen zusätzlichen Sauglüfter 26 umfasst. Zwischen einem Motorgehäuse 27 und einem Getriebegehäuse 28 der Elektrohandwerkzeugmaschine 24 ist ein modulares Zwischenstück 29 angeordnet, welches wenigstens einen Saugeinlass, einen Sauglüfterraum, einen Ausblasauslaß und mindestens ein lösbares Befestigungselement für ein Befestigen eines eine Absaugvorrichtung bildenden Absaugmoduls 15 umfasst. Mit dem vom Elektromotor der Elektrohandwerkzeugmaschine angetriebenen Sauglüfter 26 wird ein Unterdruck in einem Ansaugteil 11 des Absaugmoduls 15 erzeugt, um das beim Bohren anfallende Bohrgut abzusaugen.

In Fig. 2 ist die Elektrohandwerkzeugmaschine 24 in lösbarer Verbindung mit dem Absaugmodul 15 (auch Absaugvorrichtung genannt) gezeigt. Das Absaugmodul 15 umfasst wenigstens das Ansaugteil 10 mit einem Saugkopf 11 zum Aufbringen auf eine nicht gezeigte Arbeitsfläche, einen Saugkanal 12 sowie einen Staubbehälter 14, wobei die Absaugvorrichtung im montierten Zustand ein arbeitsflächenseitiges Ende 50 und ein maschinenseitiges Ende 51 aufweist. Der Saugkopf 11 ist arbeitsflächenseitig angeordnet und der Staubbehälter 14 maschinenseitig. Der Staubbehälter 14 ist in einem Gehäuse 16 angeordnet. Wenigstens das Ansaugteil 10 mit dem Saugkopf 11, der Saugkanal 12 und der Staubbehälter 14 sind als abnehmbares Absaugmodul 15 integriert. Der Staubbehälter 14 ist in das Gehäuse 16 einschiebbar und entsprechend entnehmbar.

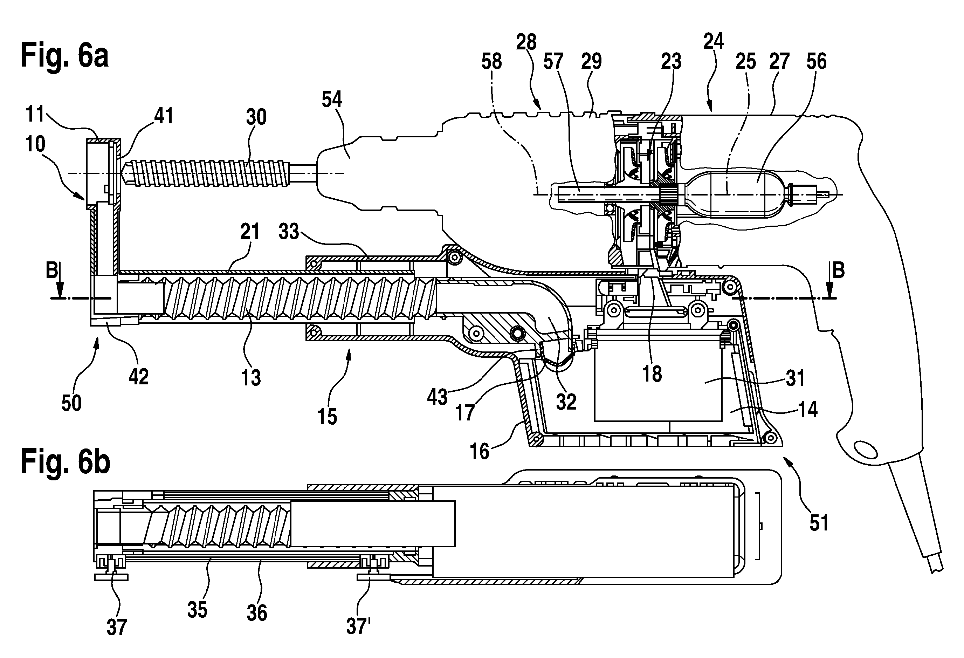

Die Elektrohandwerkzeugmaschine 24 weist eine Pistolenbauweise auf. Hierbei ist ein Griffteil 52 vorgesehen, zu dem winklig ein Motorteil 53 verläuft. Im Motorteil 53 befindet sich ein Elektromotor 56, der in dem bereits genannten Motorgehäuse 27 untergebracht ist. Der Elektromotor 56 weist eine Motordrehachse 25 auf und dient dazu, eine Werkzeugaufnahme 54 drehend anzutreiben. Insofern weist die Werkzeugaufnahme 54 eine Werkzeugdrehachse 55 auf. Die Elektrohandwerkzeugmaschine 24 ist insbesondere als Bohrmaschine, bevorzugt als Schlagbohrmaschine oder Bohrhammer ausgebildet, sodass es sich bei dem in die Werkzeugaufnahme 54 einzuspannenden Werkzeug insbesondere um einen Bohrer handelt. Motordrehachse 25 und Werkzeugdrehachse 55 verlaufen gleichgerichtet; sie können zueinander fluchten oder parallel zueinander versetzt liegen. Zwischen dem Elektromotor 56 und der Werkzeugaufnahme 54 ist ein Getriebe und gegebenenfalls ein Schlagwerk angeordnet. Die Werkzeugaufnahme 54 ist dem bereits erwähnten Getriebegehäuse 28 zugeordnet, das auch das Getriebe aufnimmt und gegebenenfalls das Schlagwerk. Aus der Figur 6a ist ersichtlich, dass der dort dargestellte Elektromotor 56 die verlängerte Motorwelle 57 mit Motordrehachse 25 aufweist, wobei die Motordrehachse 25 parallel zur Werkzeugdrehachse 55 der Werkzeugaufnahme 54 verläuft. Blickt man in Richtung der Werkzeugdrehachse 55, so ist erkennbar, dass sich der Staubbehälter 14 neben dem Motorteil 53 sowie am maschinenseitigen Ende 51 befindet.

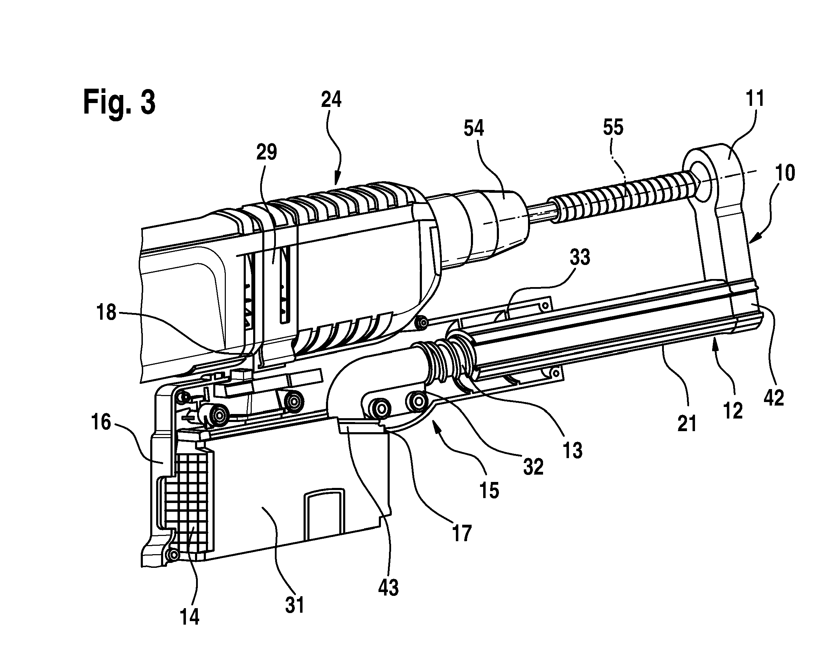

Das Ansaugteil 10 weist den als Staubauffangauge ausgebildeten Saugkopf 11 mit Dichtelement 41, z.B. Bürstendichtung (Fig. 6a) auf, die ein Werkzeug 30 umschließt. Das beim Arbeiten mit der Elektrohandwerkzeugmaschine 24 anfallende Bohrgut wird über ein Winkelstück 42 des Ansaugteils 11 durch einen im Saugkanal 12 angeordneten Faltenschlauch 13 angesaugt und in dem Staubbehälter 14 gesammelt, wie aus der Darstellung in Fig. 3 erkennbar ist.

Eine Verbindung zwischen dem Staubbehälter 14 bzw. dem Gehäuse 16 und der Elektrowerkzeugmaschine 24 ist über einen Kamin realisiert. Der Kamin wirkt auch als spielausgleichendes Element 18 und ist elastisch zu einem Dichtrahmen eines im Staubbehälter 14 angeordneten Faltenfilters 31 und elastisch zum Zwischenstück 29 der Elektrohandwerkzeugmaschine 24. Dadurch kann sowohl ein mechanischer Spielausgleich stattfinden als auch eine Dichtfunktion realisiert werden. Der Faltenschlauch 13 ist axial stauchbar beziehungsweise ausziehbar und dichtet zu den Anschlüssen im Ansaugteil 10 einerseits und zum Staubbehälter 14 andererseits. Der Faltenschlauch 13 weist an seinem im montierten Zustand dem Staubbehälter 14 zugewandten Ende ein starres, gekrümmtes Abschlussstück 32 auf. Der Staubbehälter 14 weist ein Dichtelement 17 auf, das im montierten Zustand des Staubbehälters 14 im Gehäuse 16 zum Saugkanal 12 hin öffenbar ist. Wird der Staubbehälter 14 in das Gehäuse 16 eingeschoben, so wird das Dichtelement 17 durch einen Stutzen bzw. Vorsprung am gekrümmten Abschlussstück 32 des Faltenschlauchs 13 aufgestoßen. Somit bildet sich automatisch eine Öffnung zum Faltenschlauch 13. Im demontierten Zustand des Absaugmoduls 15 ist das Dichtelement 17 geschlossen. Im gekrümmten Abschlussstück 32 des Faltenschlauchs 13 ist eine Rückschlagklappe 43 vorgesehen, mit welcher verhindert wird, dass bei der Entnahme des Staubbehälters 14 Staub aus dem Faltenschlauch 13 fällt.

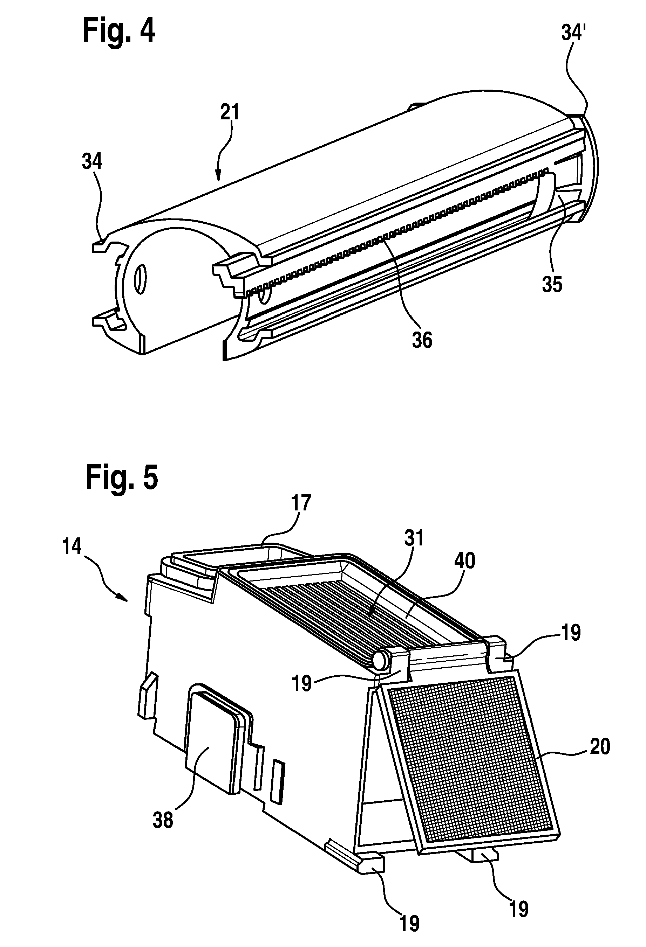

In Fig. 4 ist eine Detailansicht einer Führungsschiene 21 gezeigt, in welcher der Faltenschlauch 13 geführt wird. Die Führungsschiene 21 ist teleskopartig in einem Führungsbereich 33 des Gehäuses 16 des Absaugmoduls 15 verschiebbar geführt und dient im Wesentlichen zur bedarfsabhängigen Längenverstellung des Saugkanals 12. Durch eine integrierte Feder im Faltenschlauch 13 ist die Führungsschiene 21 rückstellbar. Die Führungsschiene 21 ist als Stranggussprofil ausgebildet ist und nach unten offen. Dadurch kann der Ausgang des Faltenschlauchs 13 herausgeführt und der Führungsbereich 33 der Führungsschiene 21 mit dem Gehäuse 16 verschiebbar gekoppelt werden. Die Führungsschiene 21 weist eingepresste und verrastete Endanschläge 34, 34' auf, wobei ein Lineal 35 mit Verzahnung 36 und Skala angeformt ist. Die Führungsschiene 21 und das Lineal 35 bilden im montierten Zustand eine Nut mit Verzahnung, in der zwei Reiter 37, 37' axial verschiebbar und diskret rastbar aufgenommen sind, wie aus Fig. 6b erkennbar ist. Die Betätigung der Reiter 37, 37' erfolgt über Drucktasten. Der arbeitsflächenseitige Reiter 37 bildet einen Tiefenanschlag, der mit Hilfe der Skala auf dem Lineal 35 auf eine gewünschte Bohrlochtiefe eingestellt werden kann. Der zweite Reiter 37' ist maschinenseitig angeordnet und läuft in einem nicht gezeigten Kanal im Gehäuse 16. Mit Hilfe des Reiters 37' kann der Arbeitshub eingestellt, zum Beispiel reduziert werden, wenn beispielsweise ein kürzeres Werkzeug 30 eingesetzt wird.

In Fig. 5 ist eine Detailansicht eines Staubbehälters 14 im demontierten Zustand dargestellt, wobei sich das Dichtelement 17 im geschlossenen Zustand befindet. Zum besseren Entleeren des Staubbehälters 14 sind auf dessen Oberfläche erhobene Stoßflächen 19 ausgebildet. An dem Staubbehälter 14 sind Rastarme 38 angeformt, die eine Verriegelung und Befestigung im Gehäuse 16 ermöglichen. Zur Entnahme des Staubbehälters 14 kann über Anpressdruck auf die seitlichen Rastarme 38 der Staubbehälter 14 aus dem Gehäuse 16 gelöst und nach unten herausgezogen werden. Das Dichtelement 17 schließt sich dabei. Im montierten Zustand fluchten die Rastarme 38 mit dem Gehäuse 16. Eine Entleerungsöffnung des Staubbehälters 14 ist als Klappe 20 ausgebildet, die im geöffneten Zustand arretierbar ist. Die Klappe 20 ist aus transparentem Material gebildet, so dass in Verbindung mit einem Sichtfenster 39 des Gehäuses 16 (sh. Fig. 2) eine Füllstandsanzeige realisiert wird.

In dem Staubbehälter 14 ist ein dort von oben eingeschobener Faltenfilter 31 angeordnet, der über nicht gezeigte in Lösestellung bringbare Widerhaken befestigt ist. Mittels des hängenden Faltenfilters 31 wird der Bohrstaub abgeschieden, und die gereinigte Absaugluft strömt über eine Auslassöffnung 40 zur Elektrohandwerkzeugmaschine 24, angesaugt von der Saugeinheit 23 in der Elektrohandwerkzeugmaschine 24. Die Luftströmung wird überdies zur Kühlung von Getriebe und/oder Schlagwerk der Elektrohandwerkzeugmaschine 24 verwendet.

In Fig. 6a ist eine bevorzugte Ausführungsform einer erfindungsgemäßen Elektrowerkzeugmaschine 24 mit Absaugmodul 15 in einer Schnittdarstellung gezeigt. Fig. 6b zeigt eine Detailansicht des Absaugmoduls 15 im Längsschnitt entlang der Linie B-B gemäß Fig. 6a. Der Aufbau entspricht dabei im Wesentlichen der detaillierten Beschreibung zu den Figuren 1 bis 5, so dass zur Meidung von Wiederholungen darauf verwiesen wird.

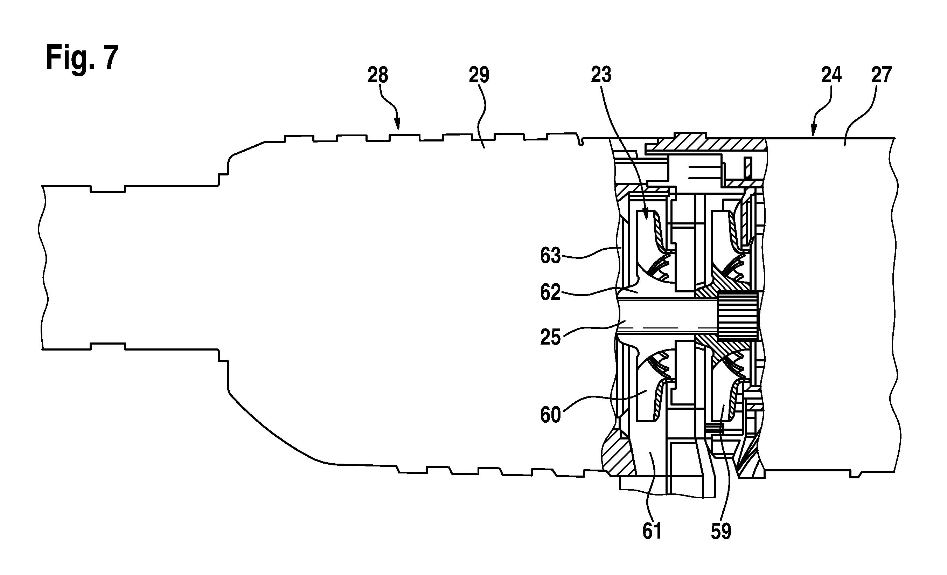

Die Fig. 7 verdeutlicht den Bereich des Elektrohandwerkzeugmaschine 24, in dem sich die Saugeinheit 23 befindet. Es ist erkennbar, dass auf der Motorwelle 25 ein Lüfterrad 59 angeordnet ist, das der Kühlung des Elektromotors 25 dient. Abgetrennt vom Lüfterrad 59 befindet sich ein Saugrad 60 auf der Motorwelle 57, das der Saugeinheit 23 angehört. Ein Saugschacht 61 der Elektrohandwerkzeugmaschine 24, der mit der Absaugvorrichtung 15 gekuppelt wird, führt zum Saugrad 60, sodass die von der Saugeinheit 23 angesaugte Luft durch den Saugschacht 61 und durch das Saugrad 60 hindurchgesaugt wird und aus seitlichen Luftauslassöffnungen 62 austreten kann. Der Luftstrom, der vom Saugrad 60 gefördert wird, kühlt gleichzeitig einen Flansch 63, wodurch es zur Kühlung des dort angeordneten Getriebes und gegebenenfalls dort angeordneten Schlagwerks kommt.

## Patentansprüche

1. Absaugvorrichtung einer Elektrohandwerkzeugmaschine (24) in Pistolenbauweise aufgrund eines Griffteils (52) und eines winklig zum Griffteil (52) verlaufenden, einen Elektromotor mit Motordrehachse (25) aufweisenden Motorteils (53), das eine eine Werkzeugdrehachse (55) aufweisende Werkzeugaufnahme (54) besitzt, wobei die Werkzeugdrehachse (55) gleichgerichtet zur Motordrehachse (25) verläuft, mit einem abnehmbaren Absaugmodul (15), das wenigstens einen Saugkopf (11) zum Aufbringen auf eine Arbeitsfläche, wenigstens einen Saugkanal (12) und einen Staubbehälter (14) aufweist sowie ein arbeitsflächenseitiges Ende und ein maschinenseitiges Ende besitzt, wobei -in Richtung der Werkzeugdrehachse (55) gesehen- der Staubbehälter (14) neben dem Motorteil (53) sowie am maschinenseitigen Ende (51) angeordnet ist, wobei eine Entleerungsöffnung des Staubbehälters (14) mit einer Klappe (20) verschließbar ist, **dadurch gekennzeichnet, dass** das Absaugmodul (15) ein spielausgleichendes Element (18) zur Verbindung mit der Elektrohandwerkzeugmaschine (24) aufweist, und dass das Element (18) einen Kamin bildet, der elastisch zu einem Dichtrahmen eines im Staubbehälter (14) angeordneten Faltenfilters (31) und elastisch zu einem zwischen einem Motorgehäuse (27) und einem Getriebegehäuse (28) der Elektrohandwerkzeugmaschine (24) angeordneten modularen Zwischenstück (29) ist, wobei das Zwischenstück wenigstens einen Saugeinlass, einen Sauglüfterraum, einen Ausblasauslass und mindestens ein lösbares Befestigungselement für ein Befestigen des Absaugmoduls (15) umfasst.

2. Absaugvorrichtung nach einem der vorhergehenden Ansprüche, **dadurch gekennzeichnet, dass** die Klappe (20) aus transparentem Material gebildet ist oder transparentes Material aufweist.

3. Absaugvorrichtung nach einem der vorhergehenden Ansprüche, **dadurch gekennzeichnet, dass** die Klappe (20) im geöffneten Zustand arretierbar ist.

4. Absaugvorrichtung nach einem der vorhergehenden Ansprüche, **dadurch gekennzeichnet, dass** die Klappe (20) beim Einsetzen des Staubbehälters (14) in das Gehäuse (16) in Schließstellung gedrängt wird.

5. Absaugvorrichtung nach einem der vorhergehenden Ansprüche, **dadurch gekennzeichnet, dass** das Absaugmodul (15) wenigstens den Saugkopf (11), den Saugkanal (12) sowie mindestens eine Schnittstelle zum lösbaren Ankuppeln des Staubbehälters (14) aufweist.

6. Absaugvorrichtung nach einem der vorhergehenden Ansprüche, **dadurch gekennzeichnet, dass** in einem Saugweg zwischen dem Saugkopf (11) und dem Staubbehälter (14) mindestens ein Faltenschlauch (13) liegt.

7. Absaugvorrichtung nach Anspruch 6, **dadurch gekennzeichnet, dass** der Saugkopf (11) einem Ansaugteil (10) angehört, das mit dem Faltenschlauch (13) verbunden ist.

8. Absaugvorrichtung nach einem der vorhergehenden Ansprüche, **dadurch gekennzeichnet, dass** der Staubbehälter (14) in ein Gehäuse (16) des Absaugmoduls (15) entnehmbar einschiebbar ist.

9. Absaugvorrichtung nach Anspruch 8, **dadurch gekennzeichnet, dass** der Staubbehälter (14) ein Dichtelement (17) aufweist, das im in das Gehäuse (16) eingesetzten Zustand des Staubbehälters (14) zum Saugkanal (12) hin öffenbar, insbesondere durch das Einsetzen selbstöffenbar, ist.

10. Absaugvorrichtung nach einem der vorhergehenden Ansprüche, **dadurch gekennzeichnet, dass** der Staubbehälter (14) erhabene Stoßelemente (19) zur Schonung der übrigen Behälterstruktur aufweist.

11. Absaugvorrichtung nach einem der vorhergehenden Ansprüche, **dadurch gekennzeichnet, dass** das Absaugmodul (15) eine teleskopierbare Führungsschiene (21) aufweist.

12. Absaugvorrichtung nach Anspruch 11, **dadurch gekennzeichnet, dass** die Führungsschiene (21) als ein im montierten Zustand nach unten offenes Profil ausgebildet ist.

13. Elektrohandwerkzeugmaschine in Pistolenbauweise aufgrund eines Griffteils und eines winklig zum Griffteil verlaufenden, einen Elektromotor mit Motordrehachse aufweisenden Motorteils, das eine eine Werkzeugdrehachse aufweisende Werkzeugaufnahme besitzt, wobei die Werkzeugdrehachse gleichgerichtet zur Motordrehachse verläuft, **gekennzeichnet durch** eine Absaugvorrichtung (15) nach einem oder mehreren der vorhergehenden Ansprüche.

14. Elektrohandwerkzeugmaschine nach Anspruch 13, **dadurch gekennzeichnet, dass** die als Absaugmodul ausgebildete Absaugvorrichtung (15) über mindestens eine lösbare Rastverbindung (22) an der Elektrohandwerkzeugmaschine (24) befestigbar ist.

15. Elektrohandwerkzeugmaschine nach einem der Ansprüche 13 und 14, **dadurch gekennzeichnet, dass** die Elektrohandwerkzeugmaschine (24) eine Saugeinheit (23) zur Erzeugung eines Unterdrucks für das Absaugmodul (15) aufweist.

## Claims

1. Suction device for a portable electric power tool (24) having a pistol-type construction on account of a handle part (52) and a motor part (53) which extends at an angle to the handle part (52), has an electric motor having a motor axis of rotation (25) and has a tool mount (54) having a tool axis of rotation (55), wherein the tool axis of rotation (55) extends in the same direction as the motor axis of rotation (25), having a removable suction module (15), which has at least one suction head (11) for applying to a work surface, at least one suction channel (12) and a dust container (14), and also has an end on the work - surface side and an end on the machine side, wherein - as seen in the direction of the tool axis of rotation (55) - the dust container (14) is arranged next to the motor part (53) and at the end (51) on the machine side, wherein an emptying opening in the dust container (14) is closable by way of a flap (20), **characterized in that** the suction module (15) has a play-compensating element (18) for connecting to the portable electric power tool (24), and **in that** the element (18) forms a chimney which is resilient with respect to a sealing frame of a corrugated filter (31) arranged in the dust container (14) and is resilient with respect to a modular intermediate piece (29) arranged between a motor housing (27) and a transmission housing (28) of the portable electric power tool (24), wherein the intermediate piece comprises at least one suction inlet, a suction fan space, an exhaust outlet and at least one detachable fastening element for fastening the suction module (15).

2. Suction device according to one of the preceding claims, **characterized in that** the flap (20) is formed from transparent material or includes transparent material.

3. Suction device according to either of the preceding claims, **characterized in that** the flap (20) is lockable in the opened state.

4. Suction device according to one of the preceding claims, **characterized in that** the flap (20) is pushed into the closed position when the dust container (14) is inserted into the housing (16).

5. Suction device according to one of the preceding claims, **characterized in that** the suction module (15) has at least the suction head (11), the suction channel (12) and at least one interface for detachably coupling the dust container (14).

6. Suction device according to one of the preceding claims, **characterized in that** at least one corrugated hose (13) is located in a suction path between the suction head (11) and the dust container (14).

7. Suction device according to Claim 6, **characterized in that** the suction head (11) belongs to a suction part (10) which is connected to the corrugated hose (13).

8. Suction device according to one of the preceding claims, **characterized in that** the dust container (14) is insertable in a removable manner into a housing (16) in the suction module (15).

9. Suction device according to Claim 8, **characterized in that** the dust container (14) has a sealing element (17) which, when the dust container (14) is in the state inserted into the housing (16), can open towards the suction channel (12), in particular can open automatically as a result of the insertion.

10. Suction device according to one of the preceding claims, **characterized in that** the dust container (14) has raised impact elements (19) for protecting the rest of the container structure.

11. Suction device according to one of the preceding claims, **characterized in that** the suction module (15) has a telescopic guide rail (21).

12. Suction device according to Claim 11, **characterized in that** the guide rail (21) is in the form of a downwardly open profile in the mounted state.

13. Portable electric power tool having a pistol-type construction on account of a handle part and a motor part which extends at an angle to the handle part, has an electric motor having a motor axis of rotation and has a tool mount having a tool axis of rotation, wherein the tool axis of rotation extends in the same direction as the motor axis of rotation, **characterized by** a suction device (15) according to one or more of the preceding claims.

14. Portable electric power tool according to Claim 13, **characterized in that** the suction device (15) in the form of a suction module is fastenable to the portable electric power tool (24) via at least one releasable latching connection (22).

15. Portable electric power tool according to either of Claims 13 and 14, **characterized in that** the portable electric power tool (24) has a suction unit (23) for generating a negative pressure for the suction module (15).

## Revendications

1. Dispositif d'aspiration d'une machine-outil électrique à main (24), en forme de pistolet, constituée d'une partie de préhension (52) et d'une partie de moteur (53) s'étendant suivant un certain angle par rapport à la partie de préhension (52), présentant un moteur électrique avec un axe de rotation de moteur (25), qui possède un logement d'outil (54) présentant un axe de rotation d'outil (55), l'axe de rotation d'outil (55) s'étendant dans le même sens que l'axe de rotation de moteur (25), avec un module d'aspiration (15) amovible, qui présente au moins une tête aspirante (11) à appliquer sur une surface de travail, au moins un canal d'aspiration (12) et un récipient de collecte de poussière (14), et possédant aussi une extrémité du côté de la surface de travail et une extrémité du côté de la machine, le récipient de collecte de poussière (14) - vu dans la direction de l'axe de rotation de l'outil (55) - étant disposé à côté de la partie du moteur (53) et à l'extrémité (51) du côté de la machine, une ouverture de vidange du récipient de collecte de poussière (14) pouvant être fermée avec un volet (20), **caractérisé en ce que** le module d'aspiration (15) présente un élément (18) de compensation du jeu devant être connecté à la machine-outil électrique à main (24) et **en ce que** l'élément (18) forme une cheminée qui est élastique par rapport à un cadre d'étanchéité d'un filtre plissé (31) disposé dans le récipient de collecte de poussière (14) et élastique par rapport à un élément intermédiaire modulaire (29) disposé entre un boîtier de moteur (27) et un boîtier de transmission (28) de la machine-outil électrique à main (24), l'élément intermédiaire comprenant au moins une entrée d'aspiration, un espace de ventilation d'aspiration, une sortie de soufflage et au moins un élément de fixation amovible pour une fixation du module d'aspiration (15) .

2. Dispositif d'aspiration selon l'une quelconque des revendications précédentes, **caractérisé en ce que** le volet (20) est formé d'un matériau transparent ou présente un matériau transparent.

3. Dispositif d'aspiration selon l'une quelconque des revendications précédentes, **caractérisé en ce que** le volet (20) peut être bloqué dans l'état ouvert.

4. Dispositif d'aspiration selon l'une quelconque des revendications précédentes, **caractérisé en ce que** le volet (20) est pressé dans la position de fermeture lors de l'insertion du récipient de collecte de poussière (14) dans le boîtier (16).

5. Dispositif d'aspiration selon l'une quelconque des revendications précédentes, **caractérisé en ce que** le module d'aspiration (15) présente au moins la tête aspirante (11), le canal d'aspiration (12) ainsi qu'au moins une interface pour l'accouplement desserrable du récipient de collecte de poussière (14).

6. Dispositif d'aspiration selon l'une quelconque des revendications précédentes, **caractérisé en ce que**, dans une voie d'aspiration entre la tête aspirante (11) et le récipient de collecte de poussière (14), est situé au moins un tuyau flexible plissé (13) .

7. Dispositif d'aspiration selon la revendication 6, **caractérisé en ce que** la tête aspirante (11) appartient à une partie d'aspiration (10) qui est connectée au tuyau flexible plissé (13).

8. Dispositif d'aspiration selon l'une quelconque des revendications précédentes, **caractérisé en ce que** le récipient de collecte de poussière (14) peut être enfoncé de manière amovible dans un boîtier (16) du module d'aspiration (15).

9. Dispositif d'aspiration selon la revendication 8, **caractérisé en ce que** le récipient de collecte de poussière (14) présente un élément d'étanchéité (17), qui, dans l'état du dispositif de collecte de poussière (14) inséré dans le boîtier (16) peut être ouvert vers le canal d'aspiration (12), en particulier peut être ouvert automatiquement en raison de l'insertion.

10. Dispositif d'aspiration selon l'une quelconque des revendications précédentes, **caractérisé en ce que** le récipient de collecte de poussière (14) présente des éléments de butée rehaussés (19) pour protéger le reste de la structure du récipient.

11. Dispositif d'aspiration selon l'une quelconque des revendications précédentes, **caractérisé en ce que** le module d'aspiration (15) présente un rail de guidage télescopable (21).

12. Dispositif d'aspiration selon la revendication 11, **caractérisé en ce que** le rail de guidage (21) est réalisé sous la forme d'un profilé ouvert vers le bas dans l'état monté.

13. Machine-outil électrique à main en forme de pistolet constituée d'une partie de préhension et d'une partie de moteur s'étendant suivant un certain angle par rapport à la partie de préhension, présentant un moteur électrique avec un axe de rotation de moteur, qui possède un logement d'outil présentant un axe de rotation d'outil, l'axe de rotation d'outil s'étendant dans le même sens que l'axe de rotation de moteur, **caractérisée par** un dispositif d'aspiration (15) selon l'une quelconque ou plusieurs des revendications précédentes.

14. Machine-outil électrique à main selon la revendication 13, **caractérisée en ce que** le dispositif d'aspiration (15) réalisé sous forme de module d'aspiration peut être fixé par le biais d'au moins une connexion par encliquetage desserrable (22) à la machine-outil électrique à main (24).

15. Machine-outil électrique à main selon l'une quelconque des revendications 13 et 14, **caractérisée en ce que** la machine-outil électrique à main (24) présente une unité d'aspiration (23) pour produire une dépression pour le module d'aspiration (15).
